# EUROPEAN PATENT SPECIFICATION

(11) **EP 4 115 772 B1**
(45) Date of publication and mention of the grant of the patent: **29.10.2025**
(21) Application number: 22382162.0
(22) Date of filing: 25.02.2022
(51) Int. Cl.: A47C 7/42, F16B 12/20, F16B 12/12

(54) **COUPLING DEVICE FOR SOFA AND ARMCHAIR BACKRESTS**
KUPPLUNGSVORRICHTUNG FÜR SOFA- UND SESSELRÜCKENLEHNEN
DISPOSITIF D'ACCOUPLEMENT POUR DOSSIERS DE CANAPÉS ET DE FAUTEUILS

(30) Priority: 08.07.2021 ES 202131430 U
(43) Date of publication of application: 11.01.2023
(73) Proprietor: Fama Sofas, S.L.U., 30510 Yecla (Murcia) (ES)
(72) Inventor: Lopez Gil, Felix, 30510 Yecla (Murcia) (ES)
(74) Representative: Ballester Cañizares, Rosalia

(56) References cited:
- EP-A1- 1 978 195
- US-A1- 2004 155 509
- US-A1- 2016 348 705

## Description

### Technical field

This invention relates to a coupling device for sofa and/or armchair backrests of the relaxation type, which allows their assembly and disassembly operations to be simplified.

### State of the art

In the state of the prior art, sofas or armchairs equipped with *relaxation* mechanisms are known, which have different types of openings configured to move the front of the sofa or armchair forward, transforming the front of the sofa or armchair into a footrest and tilting the backrest to adopt a comfortable way of resting in the reclined position.

These types of mechanisms have on their rear part plates on both sides that serve to couple the backrests of said sofas or armchairs. These plates are designed to be coupled in female guides that are placed inside the frame of the backrest. With this system, it is possible to send the armchair or sofa disassembled, thanks to which it takes up less space and prevents problems during transport. In addition, this assembly does not require tools nor additional screws and bolts.

The mechanism described has two major problems. The first technical problem is that the female guide is in a place with little or no accessibility and/or visibility. This means that -in many cases- when trying to insert the plates into the female guides, they do not coincide, which may mean that one of the guides might fit, but not the other. This fact can go undetected, which is why the mechanism may break. To prevent this, in many cases it is decided to send the sofa or armchair from the factory already assembled, with the added cost that this entails.

The second problem relates to a metal strap that has the female guide on its upper part configured as a stop for the guide. This strap is a kind of latch which, when the plate is fully inserted, it makes a *click* that prevents the backrest becoming detached during use. However, this technical solution is very problematic, as every time it is necessary to remove the backrest to carry out inspections or repairs -or because one of the sides has not entered properly, as mentioned above- the operation is extremely complex and requires great skill to perform this operation correctly. Furthermore, it is an operation that is not without danger for the operators, finger injuries and broken nails being common.

Therefore, a coupling mechanism for sofas or relaxation-type armchair backrests is needed that facilitates and simplifies the coupling, so that its assembly and disassembly is simple, efficient, and free from physical risks for the operators.

The document US20160348705A1 that corresponds to the preamble of claim 1 discloses a connection bracket and a support couple with a male bracket. The connection bracket includes: a first end portion and a second end portion; an opening in the first end portion; a central body extending between the first end portion and the second end portion; a first guide and a second guide; the first guide integral with the central body and being folded to form an open channel, and the second guide integral with the central body and being folded to form the open channel First and second spacers integral with the central body include first and second passageways therethrough. The central body includes an opening and a spring-loaded latch which extends from the central body into the opening and is movable with respect to the central body and the opening and secures the male bracket to the connection bracket.

The document US20040155509A1 provides a knock-down furniture bracket assembly which includes a mounting bracket and a slide bracket, both of which are tapered and are configured to slidably mate with one another. The mounting bracket attaches to a base of a piece of seating furniture and the slide bracket attaches to a back of the piece of seating furniture. The mounting bracket has a slot provided therethrough and the slide bracket has a dimple extending outwardly thereof. Upon sliding the slide bracket onto the mounting bracket, the dimple engages the slot in the mounting bracket to prevent movement of the slide bracket relative to the mounting bracket. The dimple can be disengaged from the slot upon an application of a predetermined force.

Finally, the document EP1978195A1 discloses a plug-in fitting for connecting two furniture components has a housing section consisting of an approximate U-profile, the centre member of which has a spring locking tongue, and the side members of which are provided with embossments which lie at a distance to the plane of the centre member, project inwards, and bear upon the upper side of plug-in tongue, wherein in the assembled state a locking component of the locking tongue engages in a recess of the plug-in tongue.

### Explanation of the invention

As previously indicated, an object of this invention is a coupling mechanism for sofa or relaxation-type armchairs which allows its assembly operation to be simplified in accordance with the mechanism of claim 1. Particular solutions of this invention are described in the dependent claims.

More specifically, the mechanism of the invention is configured as a truncated cone-shaped part configured to guide the plate so that it guides or embeds the plate so that it couples properly with the female guide. In this way, the disadvantages described in the state of the art are avoided. Thus, the lower width of the truncated cone-shaped part is able to absorb the possible differences in width that the plates of the backrest may present, since the plates, being pieces made from sheet metal, may present a certain flexibility and oscillate slightly towards both sides, above all, when the width of the sofa or armchair is greater. Therefore, thanks to the truncated cone-shaped part, -which acts like a funnel- the operation to fit the plates into the guides is achieved easily, errors are avoided, and the assembly process of the sofa or armchair is consequently simplified.

Finally, another additional advantage of using the truncated cone-shaped part is that it avoids the strap or latch of the systems described in the state of the art. Therefore, the truncated cone-shaped part is configured as a new backrest retention system so that it cannot become detached, making the strap, which is responsible for many injuries to operators' fingers, unnecessary.

### Brief explanation of the drawings

In order to supplement this description and for the purpose of helping with a better understanding of the characteristics of the invention, said description is accompanied by, as an integral part of it, a set of drawings in which the following is shown for illustrative and non-limiting purposes:
Figure 1 - An isolated perspective view of a first practical embodiment of the truncated cone-shaped part that forms part of the coupling mechanism for sofa and armchair backrests, which is the object of this invention.
Figure 2 - A perspective and sectional view of the truncated cone-shaped part of figure 1 coupled to the female guide and on the plate to form the coupling mechanism in the position of use.
Figure 3 - An isolated perspective view of a second practical embodiment of the truncated cone-shaped part that forms part of the coupling mechanism for sofa and armchair backrests, which is the object of this invention.
Figure 4 - A partial view of the truncated cone-shaped part of figure 3 configured as a guide coupled to the coupling mechanism in the position of use.
Figure 5 - A complete view of the *relaxation* mechanism of a sofa or armchair, with the truncated cone-shaped part of figures 3 and 4 coupled.

### Detailed explanation of one embodiment of the invention

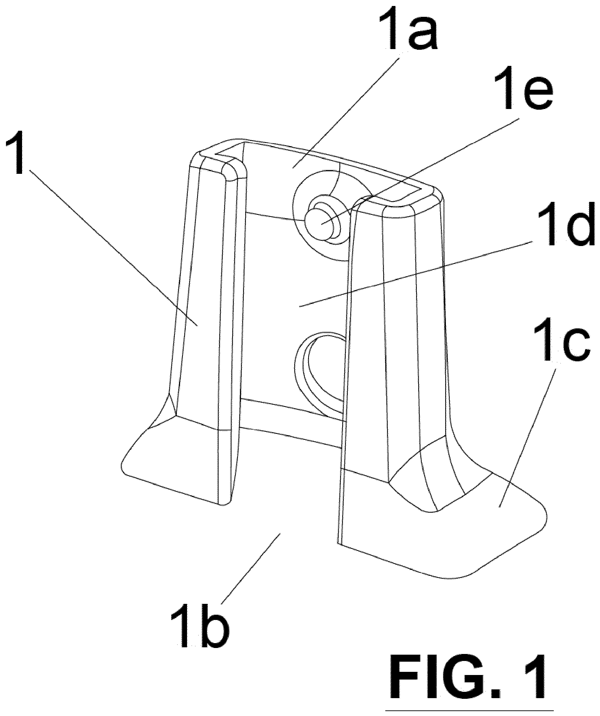

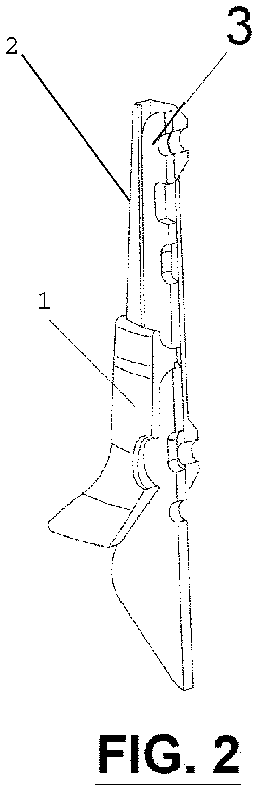

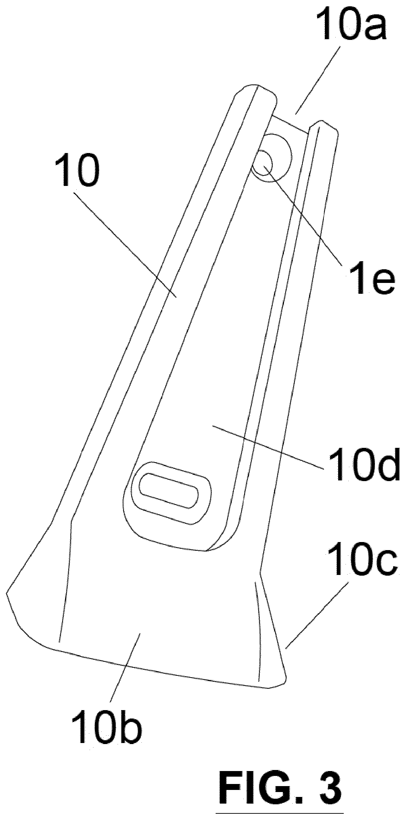

As can be seen in the attached figures, this invention can be realised in two practical embodiments. In a first practical embodiment (figures 1 and 2) the coupling mechanism comprises a truncated cone-shaped part (1) which is coupled to the female guide (2) and which, in turn, is coupled to the plate (3). In the second practical embodiment (figures 3 to 5), the truncated cone-shaped part (10) is more elongated and configured to replace the female guide (2) and is therefore coupled directly to the plate (3).

With reference to **figure 1****,** the coupling mechanism of the invention comprises a truncated cone-shaped part (1) which is hollow and open at its upper and lower ends, such that the lower end (1b) is wider than the upper end (1a). In addition, the lower end (1b) has an inclined skirt (1c) which is configured to guide the plate (3) during the assembly operation so that said plate (3) can be inserted into the female guide (2) correctly, as seen better in **figure 2****.**

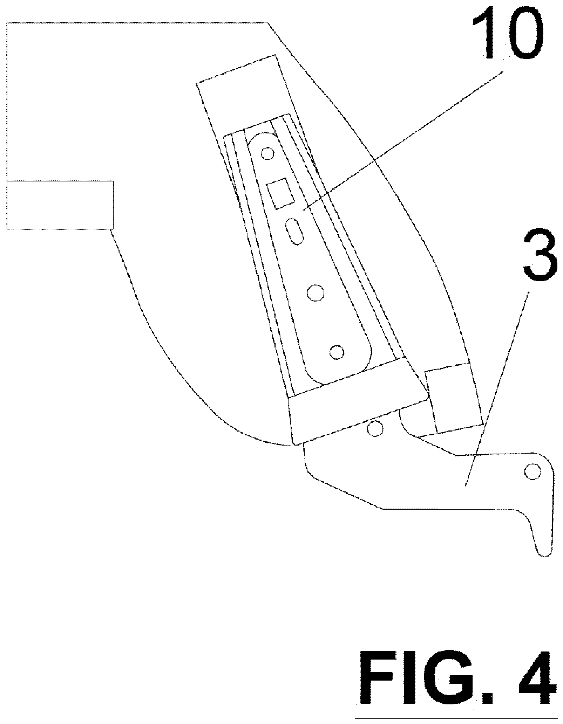

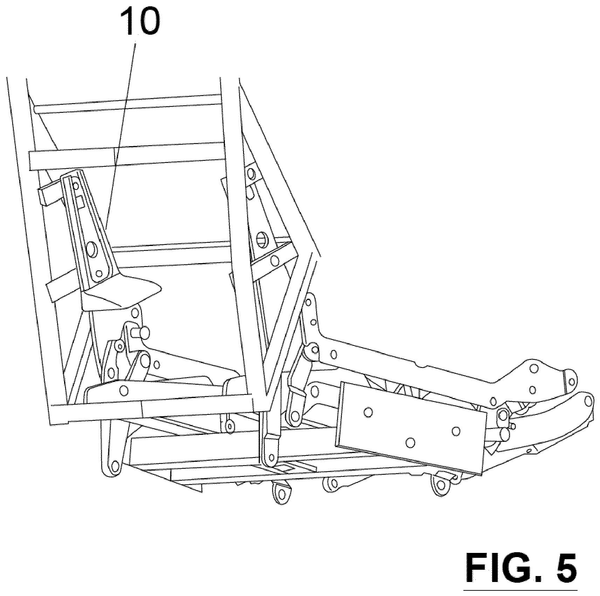

**Figure 3** shows the second embodiment of the coupling mechanism of the invention comprising a truncated cone-shaped part (10) which, as in the first embodiment, is a hollow piece and open at its upper and lower ends, such that the lower end (10b) is wider than the upper end (10a). In addition, the lower end (10b) has a skirt (10c) which is configured to guide the plate (3) during the assembly operation, as seen better in **figure 4** or **figure 5****.**

In both embodiments, the truncated cone-shaped part (1,10) comprises an open side area (1d, 10d) which facilitates the subsequent assembly of the mechanism, as well as an internal protrusion (1e, 10e) located on the inner surface close to the upper end (1a,10a) of the truncated cone-shaped part (1,10) and which is configured to prevent the piece (1,10) from becoming detached from the plate (3) when assembled or in the position of use.

Therefore, the only practically appreciable difference between the first and second embodiment of the truncated cone-shaped part (1,10) is its length, understood as the measured distance between the upper end (1a,10a) and the lower end (1b,10b), and that it is considerably greater in the second embodiment so that it can act directly as a guide for the plate (3), replacing the female plate (2) of the first practical embodiment.

In short, the truncated cone-shaped part (1,10) in both practical embodiments, allows for the plate (3) to be guided or embedded for correct coupling with the female guide (2) or in the truncated cone-shaped part (10) itself in the second embodiment. Thus, the lower width of the truncated cone-shaped part (1,10) is able to absorb the possible differences in width that the two plates (3) of the backrest may present and facilitate their assembly.

In addition, as the truncated cone-shaped parts (1,10) are made of injected plastic, a better grip is achieved and, in the event of needing to remove the backrest, only slight pressure will be required to release the internal protrusion (1e, 10e) from the corresponding retaining hole of the plate (3).

## Claims

1. Coupling device for sofa and armchair backrests including a relaxation mechanism comprising at least one plate (3) with a retaining hole configured to move the front of the sofa or armchair forward, transforming the front of the sofa or armchair into a footrest and tilting the backrest,
the coupling device comprising, at least,
one truncated cone-shaped hollow part (1,10) made of injected plastic comprising:
an open upper end (1a,10a) and an open lower end (1b, 10b) wherein the lower end (1b,10b) is wider than the upper end (1a,10a),
an open side area (1d, 10d),
an internal protrusion (1e, 10e) located on the inner surface close to the upper end (1a,10a) arranged to be housed in the retaining hole of the at least one plate (3) of the relaxation mechanism in an assembled position,
wherein the at least one cone-shaped hollow part (1,10) is selected from:
a first type of truncated cone shaped hollow part (1) which is coupled to a female guide (2) which is in turn coupled to the at least one plate (3) of the relaxation mechanism; or
a second type of truncated cone-shaped hollow part (10) which can be directly coupled to the at least one plate (3) of the relaxation mechanism,
wherein the second type of truncated cone-shaped part (10) has a distance between the upper end (10a) and the lower end (10b) greater than the distance between the upper end (1a) and the lower end (1b) of the first type of truncated cone-shaped part (1); the coupling device being **characterized in that**
the lower end of the truncated cone-shaped hollow part (1, 10) has an inclined skirt (1c, 10c) which is configured to guide the plate (3) during an assembly operation.

## Patentansprüche

1. Kupplungsvorrichtung für Sofa- und Sesselrücklehnen, enthaltend einen Entspannungsmechanismus, der mindestens eine Platte (3) mit einem Rückhalteloch umfasst, das dazu konfiguriert ist, die Vorderseite des Sofas oder Sessels nach vorne zu bewegen, wobei die Vorderseite des Sofas oder Sessels in eine Fußstütze umgewandelt und die Rückenlehne gekippt wird,
wobei die Kupplungsvorrichtung mindestens Folgendes umfasst:
ein kegelstumpfförmiges Hohlteil (1, 10) aus spritzgegossenem Kunststoff, umfassend:
ein offenes oberes Ende (1a, 10a) und ein offenes unteres Ende (1b, 10b), wobei das untere Ende (1b, 10b) breiter ist als das obere Ende (1a, 10a),
einen offenen Seitenbereich (1d, 10d),
einen inneren Vorsprung (1e, 10e), der sich an der inneren Oberfläche nahe dem oberen Ende (1a, 10a) befindet und dazu ausgelegt ist, in dem Rückhalteloch der mindestens einen Platte (3) des Entspannungsmechanismus in einer zusammengebauten Position aufgenommen zu werden,
wobei das mindestens eine kegelförmige Hohlteil (1, 10) ausgewählt ist aus:
einem ersten Typ eines kegelstumpfförmigen Hohlteils (1), das mit einer Aufnahmeführung (2) gekoppelt ist, die wiederum mit mindestens einer Platte (3) des Entspannungsmechanismus gekoppelt ist; oder
einem zweiten Typ eines kegelstumpfförmigen Hohlteils (10), das direkt mit mindestens einer Platte (3) des Entspannungsmechanismus gekoppelt werden kann,
wobei der zweite Typ des kegelstumpfförmigen Teils (10) einen Abstand zwischen dem oberen Ende (10a) und dem unteren Ende (10b) aufweist, der größer ist als der Abstand zwischen dem oberen Ende (1a) und dem unteren Ende (1b) des ersten Typs des kegelstumpfförmigen Teils (1);
wobei die Kupplungsvorrichtung **dadurch gekennzeichnet ist, dass** das untere Ende des kegelstumpfförmigen Hohlteils (1, 10) eine geneigte Schürze (1c, 10c) aufweist, die dazu konfiguriert ist, die Platte (3) während eines Montagevorgangs zu führen.

## Revendications

1. Dispositif d'accouplement pour dossiers de canapé et de fauteuil comportant un mécanisme de relaxation comprenant au moins une plaque (3) avec un trou de retenue configuré pour déplacer l'avant du canapé ou du fauteuil vers l'avant, transformant l'avant du canapé ou du fauteuil en repose-pieds et inclinant le dossier,
le dispositif d'accouplement comprenant, au moins,
une partie creuse de forme de tronconique (1, 10) réalisée en plastique injecté comprenant :
une extrémité supérieure ouverte (1a, 10a) et une extrémité inférieure ouverte (1b, 10b) dans laquelle l'extrémité inférieure (1b, 10b) est plus large que l'extrémité supérieure (1a, 10a),
une zone latérale ouverte (1d, 10d),
une protubérance interne (1e, 10e) située sur la surface interne près de l'extrémité supérieure (1a, 10a) agencée pour être logée dans le trou de retenue de l'au moins une plaque (3) du mécanisme de relaxation dans une position assemblée,
dans lequel l'au moins une partie creuse de forme conique (1, 10) est choisie parmi :
un premier type de partie creuse de forme tronconique (1) qui est accouplé à un guide femelle (2) qui est à son tour accouplé à l'au moins une plaque (3) du mécanisme de relaxation ; ou
un second type de partie creuse de forme tronconique (10) qui peut être directement accouplé à l'au moins une plaque (3) du mécanisme de relaxation,
dans lequel le second type de partie de forme tronconique (10) a une distance entre l'extrémité supérieure (10a) et l'extrémité inférieure (10b) supérieure à la distance entre l'extrémité supérieure (1a) et l'extrémité inférieure (1b) du premier type de partie de forme tronconique (1) ;
le dispositif d'accouplement étant **caractérisé en ce que**
l'extrémité inférieure de la partie creuse de forme tronconique (1, 10) a une jupe inclinée (1c, 10c) qui est configurée pour guider la plaque (3) pendant une opération d'assemblage.
